(19) Europäisches Patentamt / European Patent Office / Office européen des brevets

(11) **EP 2 849 026 A1**

(12) **EUROPÄISCHE PATENTANMELDUNG**

(43) Veröffentlichungstag:
**18.03.2015 Patentblatt 2015/12**

(51) Int Cl.:
**G06F 3/01** (2006.01)   **G06F 3/041** (2006.01)

(21) Anmeldenummer: **14180128.2**

(22) Anmeldetag: **07.08.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **05.09.2013 DE 102013217772**

(71) Anmelder: **Robert Bosch GmbH**
**70442 Stuttgart (DE)**

(72) Erfinder:
• **Tran, Lan**
  **74321 Bietigheim-Bissingen (DE)**
• **Schmid, Dirk**
  **75397 Simmozheim (DE)**

(54) **Daten- und/oder Kommunikationsgerät sowie Verfahren zu dessen Steuerung**

(57) Bei einem Daten- und/oder Kommunikationsgerät (100) sowie Verfahren zu dessen Steuerung ist die Abhängigkeit der vom Nutzer wahrgenommenen relativen Lage einer Soll-Berührposition (107) zum zugeordneten virtuellen Bedienelement (106) vom Betrachtungswinkel (ax, ay) beseitigt. Ein berührungsempfindlicher Bildschirm (101) umfasst eine flächige, lichtdurchlässige Eingabeeinrichtung (103) oberhalb einer flächigen Anzeigeeinrichtung (105) zum Wiedergeben virtueller Bedienelemente (104). Eine Bildaufnahmeeinrichtung (116) nimmt ein Bild eines Auges (111) des Nutzers auf. Eine Bildanalysestufe (120) bestimmt eine Position des Auges im Bild. Eine Winkelbestimmungsstufe (123, 124) bestimmt den Betrachtungswinkel aus der Position des Auges im Bild. Eine Versatzermittlungsstufe (125, 126) ermittelt einen vom Betrachtungswinkel abhängigen Versatz (dx, dy) zwischen der Soll-Berührposition und einer tatsächlichen Berührposition (113) auf dem Bildschirm. Eine Korrekturstufe (127, 128) gewinnt durch Korrigieren der tatsächlichen Berührposition um den Versatz eine korrigierte Berührposition und stellt diese als Betätigungssignal zum Betätigen des der Soll-Berührposition zugeordneten virtuellen Bedienelements durch Berühren des Bildschirms an der tatsächlichen Berührposition bereit.

**Fig. 1**

**Beschreibung**

Stand der Technik

Moderne Daten- und/oder Kommunikationsgeräte, insbesondere auch deren mobile Bauformen, wie z.B. Mobiltelefone - sogenannte Smartphones - , Tablet-PCs oder Navigationsgeräte, insbesondere für einen Einsatz in einem Fahrzeug, sind zu einem großen Anteil mit berührungsempfindlichen Bildschirmen - sogenannten Touch Screens - ausgestattet, über welche Eingaben von Daten und/oder Befehlen durch einen Nutzer per Berührung mit einem Finger oder einem Zeigestift vornehmbar sind. Bei derartigen berührungsempfindlichen Bildschirmen ist eine im wesentlichen flächig ausgestaltete, lichtdurchlässige Eingabeeinrichtung, umfassend eine Anzahl berührungsempfindlicher Eingabeelemente, oberhalb einer im wesentlichen flächig ausgestalteten Anzeigeeinrichtung positioniert. Auf der Anzeigeeinrichtung sind Abbildungen von Bedienelementen, sogenannte virtuelle Bedienelemente, wiedergebbar. Eine Betätigung dieser virtuellen Bedienelemente erfolgt durch Berühren der jeweils oberhalb der virtuellen Bedienelemente befindlichen Eingabeelemente.

Ferner gibt es Geräte dieser Art, die auch mit einer Bildaufnahmeeinrichtung ausgestattet sind, wobei die Bildaufnahmeeinrichtung an zumindest im wesentlichen derselben Gehäuseseite des Gerätes angeordnet ist wie der berührungsempfindliche Bildschirm und daher auch als Frontkamera bezeichnet wird. Ein bevorzugter Einsatzzweck derartiger Frontkameras ist die Erfassung des Gesichts des Nutzers z.B. für Video-Telefonate.

Ein von zahlreichen Nutzern als störend empfundener Mangel bei der Bedienung eines berührungsempfindlichen Bildschirms liegt darin, dass die vom Nutzer wahrgenommene relative Lage einer Soll-Berührposition zum zugeordneten virtuellen Bedienelement vom Betrachtungswinkel des Nutzers abhängig ist. Als Soll-Berührposition ist dabei diejenige Position auf der Oberfläche des berührungsempfindlichen Bildschirms bezeichnet, die vom Nutzer berührt werden muss, um ein bestimmtes, dieser Soll-Berührposition zugeordnetes, angezeigtes virtuelles Bedienelement zu betätigen, d.h. die Position des jeweils genau oberhalb des virtuellen Bedienelements befindlichen Eingabeelements bzw. der dort befindlichen Eingabeelemente. Der Betrachtungswinkel des Nutzers ist der Winkel zwischen der Oberfläche des berührungsempfindlichen Bildschirms und einer Blickrichtung des Nutzers auf das virtuelle Bedienelement. Die Zuordnung der virtuellen Bedienelemente zu den Eingabeelementen erscheint somit dem Nutzer von seinem Betrachtungswinkel abhängig und verursacht Fehlbedienungen.

Offenbarung der Erfindung

Die Erfindung hat die Aufgabe, ein Daten- und/oder Kommunikationsgerät sowie ein Verfahren zu dessen Steuerung zu schaffen, bei dem die Abhängigkeit der vom Nutzer wahrgenommenen relativen Lage einer Soll-Berührposition zum zugeordneten virtuellen Bedienelement vom Betrachtungswinkel des Nutzers beseitigt ist.

Diese Aufgabe wird gelöst durch ein Daten- und/oder Kommunikationsgerät, umfassend: einen berührungsempfindlichen Bildschirm, bei dem eine im wesentlichen flächig ausgestaltete, lichtdurchlässige Eingabeeinrichtung Eingabeelemente enthält und oberhalb einer im wesentlichen flächig ausgestalteten, zum Wiedergeben virtueller Bedienelemente eingerichteten Anzeigeeinrichtung positioniert ist, eine zum Aufnehmen eines Bildes wenigstens eines Auges eines Nutzers ausgebildete Bildaufnahmeeinrichtung und eine Steuereinrichtung, die enthält: eine Bildanalysestufe zum Bestimmen einer Position des wenigstens einen Auges des Nutzers im aufgenommenen Bild, eine Winkelbestimmungsstufe zum Bestimmen eines Betrachtungswinkels des Nutzers aus der Position des wenigstens einen Auges des Nutzers im aufgenommenen Bild, eine Versatzermittlungsstufe zum Ermitteln eines vom Betrachtungswinkel abhängigen Versatzes zwischen einer Soll-Berührposition und einer vom Nutzer gewählten tatsächlichen Berührposition auf dem berührungsempfindlichen Bildschirm und eine Korrekturstufe zum Gewinnen einer korrigierten Berührposition durch Korrigieren der tatsächlichen Berührposition um den ermittelten Versatz und zum Bereitstellen der korrigierten Berührposition als Betätigungssignal zum Betätigen des der Soll-Berührposition zugeordneten der virtuellen Bedienelemente durch Berühren des berührungsempfindlichen Bildschirms an der tatsächlichen Berührposition.

Eine Bildanalysestufe wie vorstehend umschrieben ist in ihrem grundsätzlichen Aufbau etwa aus dem Bereich der Gesichtserkennung bekannt, z.B. für die Auswertung von Fotos persönlicher Identifikationsdokumente, insbesondere Passfotos. Sie ist eingerichtet zum Bestimmen der Position des wenigstens einen Auges oder auch beider Augen des Nutzers im aufgenommenen Bild mit Mitteln zur Mustererkennung. Diese Positionsangaben werden der Winkelbestimmungsstufe zugeleitet, die zum Bestimmen des Winkels eingerichtet ist, unter dem der Nutzer in die Bildaufnahmeeinrichtung blickt. Mit der bekannten Gestaltung des Daten- und/oder Kommunikationsgeräts wird daraus weiter der Betrachtungswinkel des Nutzers bestimmt, d.h. der Winkel, unter dem der Nutzer aus der Position des wenigstens einen Auges auf den berührungsempfindlichen Bildschirm, insbesondere auf ein ausgewähltes der virtuellen Bedienelemente, blickt.

Die Versatzermittlungsstufe ist ausgebildet zum Ermitteln des Versatzes zwischen der Soll-Berührposition und der vom Nutzer gewählten tatsächlichen Berührposition auf dem berührungsempfindlichen Bildschirm. Dabei ist als tatsächliche Berührposition diejenige Position auf der Oberfläche des berührungsempfindlichen Bildschirms bezeichnet, die aus dem Betrachtungswinkel des Nutzers gesehen mit dem bestimmten, der Soll-Berührposition zugeordneten, angezeigten virtuellen Bedienelement fluchtet, aus dem Betrachtungswinkel des Nutzers gesehen also scheinbar oberhalb des genannten virtuellen Bedienelements liegt, mit anderen Worten aus dem Betrachtungswinkel des Nutzers gesehen diesem virtuellen Bedienelement zugeordnet zu sein scheint und daher beim Auswählen des virtuellen Bedienelements fehlerhaft anstelle der Soll-Berührposition ausgewählt und berührt wird.

Die Korrekturstufe erfüllt erfindungsgemäß zwei Funktionen. Zum einen dient sie zum Gewinnen der korrigierten Berührposition durch Korrigieren der tatsächlichen Berührposition um den ermittelten Versatz. Die korrigierte Berührposition ist dabei diejenige Berührposition bzw. bezeichnet die Koordinatenangabe dafür auf dem berührungsempfindlichen Bildschirm, die bei korrekter Ermittlung des Versatzes der Soll-Berührposition entspricht und damit korrekt zum Auswählen des gewünschten virtuellen Bedienelements führt. Zum anderen dient die Korrekturstufe zum Bereitstellen der korrigierten Berührposition als Betätigungssignal zum Betätigen des der Soll-Berührposition zugeordneten virtuellen Bedienelements durch Berühren des berührungsempfindlichen Bildschirms an der tatsächlichen Berührposition. Das Berühren der Oberfläche des berührungsempfindlichen Bildschirms an der tatsächlichen Berührposition wählt also nach Korrigieren der tatsächlichen Berührposition um den ermittelten Versatz das gewünschte, der Soll-Berührposition zugeordnete virtuelle Bedienelement aus.

Der Erfindung liegt somit die Erkenntnis zugrunde, dass die Ursache für die Abhängigkeit der Berührposition vom Betrachtungswinkel des Nutzers in dem Umstand liegt, dass die berührungsempfindliche Oberfläche der Eingabeeinrichtung, d.h. der Eingabeelemente, konstruktionsbedingt einen bestimmten Abstand von der leuchtenden Oberfläche der unter der Eingabeeinrichtung befindlichen Anzeigeeinrichtung, d.h. der virtuellen Bedienelemente, hat. Bei schrägem Blick auf die Oberfläche des berührungsempfindlichen Bildschirms entsteht ein Parallaxenfehler, der zu einer scheinbaren Verschiebung zwischen dem virtuellen Bedienelement und dem darüber liegenden Eingabeelement führt. Auf diese Weise kann es z.B. vorkommen, dass beim Antippen eines Buchstabens auf einer auf der Anzeigeeinrichtung abgebildeten Bildschirmtastatur ein benachbarter Buchstabe getroffen wird. Die Aufgabe, die durch die vorliegende Erfindung gelöst wird, liegt also in der selbsttätigen Korrektur dieses Parallaxenfehlers im Daten- und/oder Kommunikationsgerät mit Hilfe der Bildaufnahmeeinrichtung, insbesondere in der Form einer eingebauten Frontkamera.

Die Erfindung ermöglicht eine Steigerung der Betriebssicherheit des Daten- und/oder Kommunikationsgeräts, da unabhängig von einer augenblicklichen Orientierung des Daten- und/oder Kommunikationsgeräts zum Nutzer dieser stets auch das gewünschte virtuelle Bedienelement trifft, welches er aus seinem augenblicklichen Betrachtungswinkel heraus an der davon abhängigen tatsächlichen Berührposition antippt. Dem Nutzer wird so durch die Erfindung eine präzisere Bedienung des Daten- und/oder Kommunikationsgeräts ermöglicht, auch wenn der Betrachtungswinkel von einer Senkrechten auf dem berührungsempfindlichen Bildschirm abweicht. Auch stärkere Abweichungen von der Senkrechten werden vom Daten- und/oder Kommunikationsgerät erkannt und kompensiert. Durch die Erhöhung der Präzision der Eingabe können die Abstände zwischen den einzelnen virtuellen Bedienelementen auch verkleinert werden, ohne die Bedienbarkeit für den Nutzer einzuschränken.

Gemäß einer bevorzugten Weiterbildung des erfindungsgemäßen Daten- und/oder Kommunikationsgeräts umfasst die Steuereinrichtung weiterhin eine Abstandsbestimmungsstufe zum Bestimmen eines Abstands des wenigstens einen Auges des Nutzers von der Bildaufnahmeeinrichtung aus dem Bild des wenigstens einen Auges und ist die Versatzermittlungsstufe ausgebildet zum Ermitteln des Versatzes zwischen der Soll-Berührposition und der vom Nutzer gewählten tatsächlichen Berührposition auf dem berührungsempfindlichen Bildschirm abhängig vom Betrachtungswinkel und zusätzlich vom Abstand des wenigstens einen Auges des Nutzers von der Bildaufnahmeeinrichtung.

Durch diese Weiterbildung lässt sich in vorteilhafter Weise der Einfluss eines Abstands zwischen der Bildaufnahmeeinrichtung und dem gewählten virtuellen Bedienelement berücksichtigen, der insbesondere bei großflächigen Bildschirmen und einer im Vergleich dazu dicht daran angeordneten Bildaufnahmeeinrichtung von einem Bedienelement zum anderen starke Unterschiede aufweisen kann. Aus einer Dreiecksberechnung kann auf der Grundlage des gerätespezifischen Abstands zwischen der Bildaufnahmeeinrichtung und dem gewählten virtuellen Bedienelement, dem von der Bildaufnahmeeinrichtung genaugenommen gemessenen Blickwinkel vom Auge des Nutzers auf die Bildaufnahmeeinrichtung und dem Abstand des Auges des Nutzers von der Bildaufnahmeeinrichtung der Betrachtungswinkel exakt bestimmt werden.

Die Abstandsbestimmungsstufe ist wahlweise in unterschiedlicher Form ausführbar. Vorzugsweise kann sie ausgebildet sein zum Bestimmen eines Abstands beider Augen des Nutzers zueinander im aufgenommenen Bild. Unter Voraussetzung eines fest vorgegebenen tatsächlichen Augenabstands des Nutzers, der entweder am Nutzer einmal messbar und in das Daten- und/oder Kommunikationsgerät eingebbar ist, oder unter Annahme eines Mittelwertes dieses Abstands aus einer Auswertung einer großen Mehrheit von Nutzern, z.B. von 95% der zu erwartenden Nutzer, ist der Abstand des wenigstens einen Auges des Nutzers von der Bildaufnahmeeinrichtung durch Anwendung des Strahlensatzes ermittelbar. Der Abstand des wenigstens einen Auges des Nutzers von der Bildaufnahmeeinrichtung ist dabei umgekehrt proportional zum Abstand der Augen des Nutzers zueinander im aufgenommenen Bild.

In einer anderen bevorzugten Ausgestaltung ist die Abstandsbestimmungsstufe ausgebildet zum Bestimmen des Durchmessers des Abbilds der Iris im aufgenommenen Bild des Auges des Nutzers. Unter Voraussetzung eines fest vorgegebenen tatsächlichen Irisdurchmessers des Nutzers, der entweder am Nutzer einmal messbar und in das Daten- und/oder Kommunikationsgerät eingebbar ist, oder unter Annahme eines Mittelwertes dieses Irisdurchmessers aus einer Auswertung einer großen Mehrheit von Nutzern, z.B. von 95% der zu erwartenden Nutzer, ist der Abstand des wenigstens einen Auges des Nutzers von der Bildaufnahmeeinrichtung wieder durch Anwendung des Strahlensatzes ermittelbar.

Vorteilhaft kann die Bildaufnahmeeinrichtung mit einer auf das wenigstens ein Auge des Nutzers scharf stellende selbsttätige Fokussiereinrichtung, auch als Bildschärfe-Einstelleinrichtung bzw. Autofokus bezeichnet, ausgeführt sein, und die Abstandsbestimmungsstufe ist ausgebildet zum Ableiten des Abstands des wenigstens einen Auges des Nutzers von der Bildaufnahmeeinrichtung aus einer Fokuseinstellung dieser Fokussiereinrichtung.

Die oben genannte Aufgabe wird weiterhin gelöst durch ein Verfahren zum Steuern eines gemäß der vorstehenden Beschreibung ausgebildeten Daten- und/oder Kommunikationsgeräts, wobei ein Bild wenigstens eines Auges eines Nutzers aufgenommen wird, durch Analyse des aufgenommenen Bildes in diesem eine Position des wenigstens einen Auges des Nutzers bestimmt wird, aus der Position des wenigstens einen Auges im aufgenommenen Bild ein Betrachtungswinkel des Nutzers bestimmt wird, ein vom Betrachtungswinkel abhängiger Versatz zwischen einer Soll-Berührposition und einer vom Nutzer gewählten tatsächlichen Berührposition auf dem berührungsempfindlichen Bildschirm ermittelt wird, eine korrigierte Berührposition durch Korrigieren der tatsächlichen Berührposition um den ermittelten Versatz gewonnen wird und die korrigierte Berührposition bereitgestellt wird als Betätigungssignal zum Betätigen eines der Soll-Berührposition zugeordneten virtuellen Bedienelements durch Berühren des berührungsempfindlichen Bildschirms an der tatsächlichen Berührposition.

Das erfindungsgemäße Verfahren ermöglicht in der bereits vorstehend beschriebenen Weise eine Steigerung der Betriebssicherheit und Präzisierung der Funktion des Daten- und/oder Kommunikationsgeräts, und durch die Erhöhung der Präzision der Eingabe können die Abstände zwischen den einzelnen virtuellen Bedienelementen auch verkleinert werden, ohne die Bedienbarkeit für den Nutzer einzuschränken.

Vorteilhafte Ausgestaltungen des erfindungsgemäßen Verfahrens sind in den darauf rückbezogenen Unteransprüchen gekennzeichnet.

Gemäß einer bevorzugten Weiterbildung des erfindungsgemäßen Verfahrens wird aus dem Bild des wenigstens einen Auges weiterhin ein Abstand des wenigstens einen Auges des Nutzers von der Bildaufnahmeeinrichtung bestimmt und wird der Versatz zwischen der Soll-Berührposition und der vom Nutzer gewählten tatsächlichen Berührposition auf dem berührungsempfindlichen Bildschirm abhängig vom Betrachtungswinkel und zusätzlich vom Abstand des wenigstens einen Auges des Nutzers von der Bildaufnahmeeinrichtung ermittelt. Wie vorstehend erläutert lässt sich damit der Einfluss eines Abstands zwischen der Bildaufnahmeeinrichtung und dem gewählten virtuellen Bedienelement berücksichtigen.

Nach einer weiteren bevorzugten Fortbildung des erfindungsgemäßen Verfahrens wird ein Bild beider Augen eines Nutzers aufgenommen und durch Analyse des aufgenommenen Bildes in diesem eine mittlere Augenposition der beiden Augen des Nutzers bestimmt, und wird die mittlere Augenposition in den weiteren Verfahrensschritten wahlweise anstelle der Position des wenigstens einen Auges des Nutzers ausgewertet. Als mittlere Augenposition ist dabei die Mitte zwischen den beiden Augen, d.h. im wesentlichen die Position einer Nasenwurzel des Nutzers, bezeichnet. Damit wird das Bestimmen einer günstigen, auf die Betrachtungswinkel beider Augen des Nutzers zumindest weitgehend gleichmäßig angepassten korrigierten Berührposition ermöglicht.

Bei einer weiteren bevorzugten Ausführungsform des erfindungsgemäßen Verfahrens wird als Grundlage zum Bestimmen des Abstands der Augen und/oder einer mittleren Augenposition des Nutzers von der Bildaufnahmeeinrichtung ein Abstand der Positionen der Augen im Bild voneinander ermittelt. Unter der beschriebenen Voraussetzung eines aus individueller oder statistischer Messung bestimmten, fest vorgegebenen tatsächlichen Augenabstands des Nutzers, ist der Abstand des wenigstens einen Auges des Nutzers von der Bildaufnahmeeinrichtung wieder in Anwendung des Strahlensatzes dadurch ermittelbar, dass der Abstand des wenigstens einen Auges des Nutzers von der Bildaufnahmeeinrichtung umgekehrt proportional zum Abstand der Augen des Nutzers zueinander im aufgenommenen Bild ist.

Nach einer anderen Ausführungsform des erfindungsgemäßen Verfahrens wird als Grundlage zum Bestimmen des Abstands des wenigstens einen Auges und/oder einer mittleren Augenposition des Nutzers von der Bildaufnahmeeinrichtung ein Durchmesser einer Iris im Bild des wenigstens einen Auges bestimmt und/oder wird der Abstand des wenigstens einen Auges und/oder der mittleren Augenposition des Nutzers von der Bildaufnahmeeinrichtung aus einer Einstellung einer auf das Bild des wenigstens einen Auges scharf stellenden selbsttätigen Fokussiereinrichtung der Bildaufnahmeeinrichtung gewonnen. Die sich der Bestimmung des Durchmessers der Iris bedienende Verfahrensvariante hat den Vorzug, zu ihrer Durchführung nur einen geringen Vorrichtungsaufwand zu benötigen und auf eine bei den zu erwartenden Nutzern entweder leicht messbare oder aus einer übergreifenden Statistik entnehmbare Grundlage zurückzugreifen. Ist dagegen die Bildaufnahmeeinrichtung mit einer auf das Bild des wenigstens einen Auges scharf stellenden selbsttätigen Fokussiereinrichtung ausgestattet, ermöglicht diese einen sehr vereinfachten Verfahrensablauf.

Das erfindungsgemäße Verfahren ist wahlweise auch mit einer Datenverarbeitungseinrichtung bzw. einem Rechner ausführbar. Dafür ist zur Lösung der eingangs genannten Aufgabe insbesondere ein Computerprogrammprodukt vorgesehen, das Programmteile zum Ausführen wenigstens einer Variante des vorstehend beschriebenen Verfahrens aufweist. Ferner wird die Aufgabe auch gelöst durch eine maschinenlesbare, insbesondere computerlesbare, Datenstruktur, erzeugt durch mindestens eine Variante des vorstehend beschriebenen Verfahrens und/oder durch mindestens ein Computerprogrammprodukt der vorstehenden Art. Außerdem wird die Aufgabe gelöst durch einen maschinenlesbaren, insbesondere computerlesbaren, Datenträger, auf dem mindestens ein derartiges Computerprogrammprodukt aufgezeichnet und/oder gespeichert ist und/oder auf dem mindestens eine derartige Datenstruktur zum Abruf bereit gehalten ist. Ausführungsbeispiele der Erfindung sind in der Zeichnung dargestellt und werden im nachfolgenden näher beschrieben, wobei übereinstimmende Elemente in allen Figuren mit denselben Bezugszeichen versehen sind und eine wiederholte Beschreibung dieser Elemente weggelassen wird. Es zeigen:

Figur 1 ein Beispiel für ein erfindungsgemäß ausgebildetes Daten- und/oder Kommunikationsgerät, und

Figur 2 eine Darstellung von Details des Daten- und/oder Kommunikationsgeräts gemäß Figur 1 und seiner Funktion.

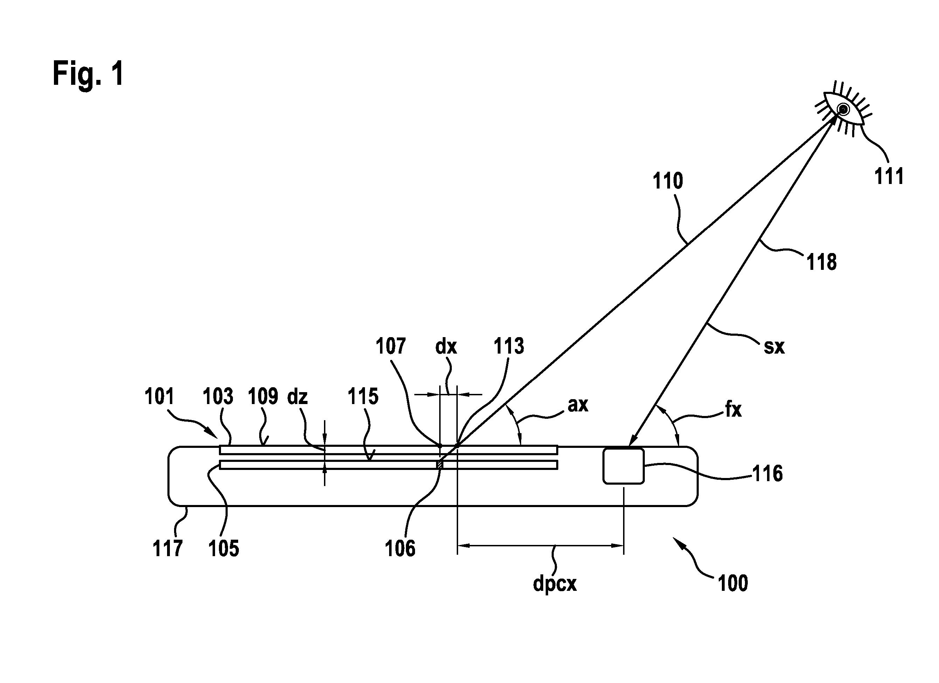

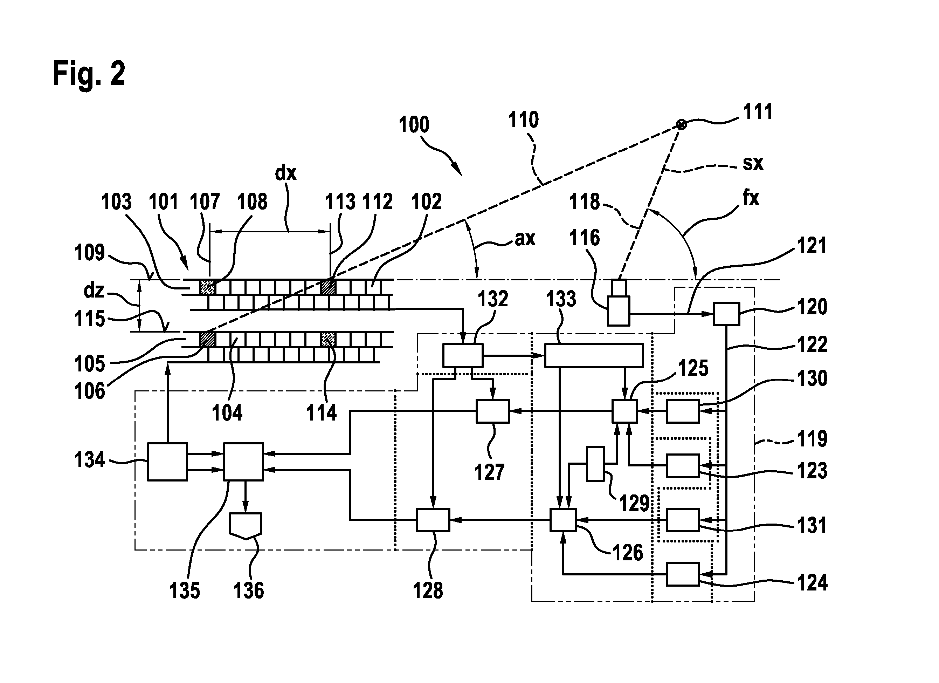

In Figur 1 ist mit dem Bezugszeichen 100 ein Daten- und/oder Kommunikationsgerät bezeichnet, z.B. ein Mobiltelefon oder ein sogenannter Tablet-PC, ausgerüstet mit einem berührungsempfindlichen Bildschirm 101, der eine flächig ausgestaltete, lichtdurchlässige, einzelne Eingabeelemente 102 enthaltende Eingabeeinrichtung 103 umfasst, die oberhalb einer flächig ausgestalteten, zum Wiedergeben virtueller Bedienelemente 104 eingerichteten Anzeigeeinrichtung 105 positioniert ist. Eine gegenüber Figur 1 detailliertere Darstellung eines Ausschnittes des berührungsempfindlichen Bildschirms 101 ist in Figur 2 wiedergegeben. Genau oberhalb eines von einem Nutzer aus allen vorhandenen virtuellen Bedienelementen 104 ausgewähltes virtuelles Bedienelement 106 ist an der dem ausgewählten virtuellen Bedienelement 106 zugeordneten Soll-Berührposition 107 ein Eingabeelement 108 angeordnet, das zum Betätigen des ausgewählten virtuellen Bedienelements 106 berührt werden muss und als Soll-Eingabeelement bezeichnet ist. Aufgrund des Abstands dz der Oberfläche 109 der Eingabeeinrichtung 103 und damit des Soll-Eingabeelements 108 von der Oberfläche 115 der Anzeigeeinrichtung 105 und damit des ausgewählten virtuellen Bedienelements 106 erscheint aus dem Betrachtungswinkel ax des Nutzers zwischen der Oberfläche 109 der Eingabeeinrichtung 103 und damit des berührungsempfindlichen Bildschirms 101 und einer Blickrichtung 110 des Nutzers von seinem Auge 111 her auf das ausgewählte virtuelle Bedienelement 106 anstelle des Soll-Eingabeelements 108 nun ein davon um einen Versatz dx entlang der Oberfläche 109 beabstandetes Ist-Eingabeelement 112 oberhalb des ausgewählten virtuellen Bedienelements 106 sich zu befinden. Dieses Ist-Eingabeelement 112 befindet sich jedoch in Wirklichkeit an einer tatsächlichen Berührposition 113 exakt oberhalb eines vom ausgewählten virtuellen Bedienelement 106 verschiedenen und ebenfalls um dx beabstandeten anderen virtuellen Bedienelements 114, welches ohne die erfindungsgemäße Maßnahme beim Berühren des Ist-Eingabeelements 112 entgegen der Absicht des Nutzers betätigt würde.

Das Daten- und/oder Kommunikationsgerät 100 umfasst weiterhin eine zum Aufnehmen eines Bildes des Auges 111 des Nutzers ausgebildete Bildaufnahmeeinrichtung 116, die im dargestellten Ausführungsbeispiel vorteilhaft als sogenannte Frontkamera neben dem berührungsempfindlichen Bildschirm 101 im Gehäuse 117 des Daten- und/oder Kommunikationsgeräts 100, bevorzugt aber wenigstens weitgehend an derselben Seite des Gehäuses 117 wie der berührungsempfindliche Bildschirm 101 angeordnet ist, um mit ihrem Aufnahmebereich alle beim Bedienen des Daten und/oder Kommunikationsgeräts 100 üblichen Positionen des Auges 111 des Nutzers gegenüber dem Daten- und/oder Kommunikationsgerät 100 erfassen zu können. Im dargestellten Ausführungsbeispiel ist ferner der Winkel, unter dem der Nutzer in die Bildaufnahmeeinrichtung 116 blickt, mit fx bezeichnet; dieser Winkel wird vergleichbar zum Betrachtungswinkel ax als Winkel zwischen der Oberfläche 109 des berührungsempfindlichen Bildschirms 101 und einer Blickrichtung 118 des Nutzers auf die Bildaufnahmeeinrichtung 116 gemessen. Mit sx ist der Abstand zwischen dem Auge 111 und der Bildaufnahmeeinrichtung 116 bezeichnet. In Figur 1 ist ferner mit dpcx ein Abstand zwischen der Bildaufnahmeeinrichtung 116 und der tatsächlichen Berührposition 113 bezeichnet, der außerdem von der Bauform und den Abmessungen des Daten- und/oder Kommunikationsgeräts 100, insbesondere des berührungsempfindlichen Bildschirms 101 und des Gehäuses 117, abhängig ist.

Das Daten- und/oder Kommunikationsgerät 100 umfasst ferner eine Steuereinrichtung 119. Diese enthält eine Bildanalysestufe 120 zum Bestimmen einer Position des wenigstens einen Auges des Nutzers oder einer mittleren Augenposition im von der Bildaufnahmeeinrichtung 116 aufgenommenen Bild, bevorzugt einem Bild des Gesichts des Nutzers, vorteilhaft mit Hilfe eines Bilderkennungsprogramms, wozu der Bildanalysestufe 120 über eine Bilddatenverbindung 121 Bilddaten von der Bildaufnahmeeinrichtung 116 zugeleitet werden. Die Position des wenigstens einen Auges des Nutzers beschreibende Daten werden über eine weitere Leitung 122 einer Winkelbestimmungsstufe 123 zugeführt, die zum Bestimmen des Betrachtungswinkels ax des Nutzers aus der Position des wenigstens einen Auges 111 des Nutzers im aufgenommenen Bild eingerichtet ist. Die Winkelbestimmungsstufe 123 ist mit einer Versatzermittlungsstufe 125 zum Ermitteln des vom Betrachtungswinkel ax abhängigen Versatzes dx zwischen der Soll-Berührposition 107 und der vom Nutzer gewählten tatsächlichen Berührposition 113 auf dem berührungsempfindlichen Bildschirm 101 verbunden. Eine Konstantwertstufe 129 liefert dazu an die Versatzermittlungsstufe 125 den Abstand dz. An die Versatzermittlungsstufe 125 schließt sich eine Korrekturstufe 127 zum Gewinnen einer korrigierten Berührposition durch Korrigieren der tatsächlichen Berührposition 113 um den ermittelten Versatz dx und zum Bereitstellen der korrigierten Berührposition als Betätigungssignal zum Betätigen des der Soll-Berührposition 107 zugeordneten, ausgewählten virtuellen Bedienelements 106 durch Berühren des berührungsempfindlichen Bildschirms 101 an der tatsächlichen Berührposition 113. Im vorstehenden ist der Darstellung der Zeichnung folgend vereinfacht nur eine - als x bezeichnete - von zwei Koordinaten der Oberfläche 109 beschrieben. In gleicher Weise gilt die Betrachtung auch für die zweite, dazu rechtwinklig ausgerichtete Koordinate y, für die in der Steuereinrichtung 119 eine weitere Winkelbestimmungsstufe 124 zum Bestimmen einer entlang der Koordinate y gemessenen Komponente ay des Betrachtungswinkels, eine weitere Versatzermittlungsstufe 126 zum Ermitteln eines vom Betrachtungswinkel ay abhängigen Versatzes dy und eine weitere Korrekturstufe 128 vorgesehen sind. Beide Koordinaten werden von der Bildaufnahmeeinrichtung 116 erfasst, die Position des wenigstens einen Auges also in x- und in y-Richtung bestimmt. Die Betrachtungswinkel ax, ay sowie die Winkel fx, fy zwischen der Oberfläche 109 der Eingabeeinrichtung 103 und damit des berührungsempfindlichen Bildschirms 101 und der Blickrichtung 118 des Nutzers vom Auge 111 auf die Bildaufnahmeeinrichtung 116 entlang der Koordinaten x, y sind eindeutige Funktionen der Spalten- bzw. Zeilenpositionen der Augen im aufgenommenen Bild. Die Funktionen hängen vom Objektiv und Bildaufnahmeelement, z.B. einem Halbleiter, der Bildaufnahmeeinrichtung 116 ab und werden einmalig ermittelt.

In der einfachsten Ausführungsform werden die gemessenen Winkel fx und dazu entsprechend fy als den Betrachtungswinkeln ax, ay gleich angenommen; eine Winkelumrechnung kann entfallen. Dies ist als Näherung zulässig, wenn der Abstand sx - und dazu entsprechend ein Abstand sy des Auges 111 von der Bildaufnahmeeinrichtung 116 entlang der Kordinate y gemessen - groß gegenüber dem Abstand dpcx - bzw. dementsprechend einem Abstand dpcy entlang der Kordinate y gemessen - ist. Die Versätze ergeben sich zu

$$dx = dz * \cot(ax) \quad \text{bzw.} \quad dy = dz * \cot(ay).$$

In den Korrekturstufen 127 bzw. 128 werden die Eingaben des Nutzers an der tatsächlichen Berührposition 113 mit den Koordinaten x, y um diese Versätze korrigiert und eine korrigierte Berührposition mit den Koordinaten x + dx, y + dy erhalten. Damit wird die vom Benutzer beabsichtigte Soll-Berührposition 107 genau getroffen.

In verbesserter Ausführung umfasst die Steuereinrichtung 119 je eine Abstandsbestimmungsstufe 130, 131 zum Bestimmen der Abstände sx bzw. sy aus dem Bild des Auges 111, vorzugsweise ausgestaltet mit einer Abstandsbestimmung der Positionen beider Augen im Bild, einer Bestimmung des Irisdurchmessers oder einer auf das Bild des Auges 111 scharf stellenden selbsttätigen Fokussiereinrichtung. Die Abstände sx bzw. sy können vereinfacht auch genähert als konstant angenommen werden, z.B. zu ca. 40 cm. Die Versatzermittlungsstufen 125, 126 sind dann ausgebildet, die Versätze dx, dy auch abhängig von den Abständen sx, sy zu ermitteln. Damit werden Abweichungen der Betrachtungswinkel ax, ay von den Blickwinkeln fx, fy des Nutzers in die Bildaufnahmeeinrichtung 116 berücksichtigt und die Genauigkeit der Korrektur verbessert. Ferner liefert eine mit der Eingabeeinrichtung 103 verbundene Stufe 132 die Koordinaten x, y der tatsächlichen Berührposition 113, woraus in einer weiteren Stufe 133 unter Berücksichtigung der Gestalt des Daten- und/oder Kommunikationsgeräts 100 die Abstände dpcx, dpcy bestimmt und den Versatzermittlungsstufen 125, 126 zugeleitet werden. Besonders einfach und ohne Iterationsschritte können die Abstände dpcx + dx und dpcy + dy ermittelt werden, die nur von der Gestalt des Daten- und/oder Kommunikationsgeräts 100 und der SollBerührposition 107, nicht aber von den Betrachtungswinkeln ax, ay abhängt. Mit hinreichender Genauigkeit können dpcx ungefähr gleich dpcx + dx und dpcy ungefähr gleich dpcy + dy gesetzt werden, da dx « dpcx und dx « dpcx gilt. Die Versätze ergeben sich dann zu

$$dx = dz * (dpcx + sx * \cos(fx)) / (sx * \sin(fx))$$

und

$$dy = dz * (dpcy + sy * \cos(fy)) / (sy * \sin(fy)).$$

Eine Bilderzeugungsstufe 134 ist mit der Anzeigeeinrichtung 105 verbunden und dient zum Erzeugen von Bilddaten zum Darstellen der virtuellen Bedienelemente 104. Deren Koordinaten werden in einer Vergleichsstufe 135 mit den Koordinaten x + dx, y + dy der korrigierten Berührposition verglichen. Das Vergleichsergebnis wird einer weiteren Signalverarbeitung 136 zugeleitet.

**Patentansprüche**

1. Daten- und/oder Kommunikationsgerät (100), umfassend:

   • einen berührungsempfindlichen Bildschirm (101), bei dem eine im wesentlichen flächig ausgestaltete, lichtdurchlässige Eingabeeinrichtung (103) Eingabeelemente (102) enthält und oberhalb einer im wesentlichen flächig ausgestalteten, zum Wiedergeben virtueller Bedienelemente (104) eingerichteten Anzeigeeinrichtung (105) positioniert ist,
   • eine zum Aufnehmen eines Bildes wenigstens eines Auges (111) eines Nutzers ausgebildete Bildaufnahmeeinrichtung (116) und
   • eine Steuereinrichtung (119), die enthält:

      - eine Bildanalysestufe (120) zum Bestimmen einer Position des wenigstens einen Auges (111) des Nutzers im aufgenommenen Bild,
      - eine Winkelbestimmungsstufe (123, 124) zum Bestimmen eines Betrachtungswinkels (ax, ay) des Nutzers aus der Position des wenigstens einen Auges (111) des Nutzers im aufgenommenen Bild,
      - eine Versatzermittlungsstufe (125, 126) zum Ermitteln eines vom Betrachtungswinkel (ax, ay) abhängigen Versatzes (dx, dy) zwischen einer Soll-Berührposition (107) und einer vom Nutzer gewählten tatsächlichen Berührposition (113) auf dem berührungsempfindlichen Bildschirm (101) und
      - eine Korrekturstufe (127, 128)

         ∘ zum Gewinnen einer korrigierten Berührposition durch Korrigieren der tatsächlichen Berührposition (113) um den ermittelten Versatz (dx, dy) und
         ∘ zum Bereitstellen der korrigierten Berührposition als Betätigungssignal zum Betätigen des der Soll-Berührposition (107) zugeordneten (106) der virtuellen Bedienelemente (104) durch Berühren des berührungsempfindlichen Bildschirms (101) an der tatsächlichen Berührposition (113).

2. Daten- und/oder Kommunikationsgerät (100) nach Anspruch 1, **dadurch gekennzeichnet, dass** die Steuereinrichtung (119) weiterhin eine Abstandsbestimmungsstufe (130, 131) zum Bestimmen eines Abstands (sx, sy) des wenigstens einen Auges (111) des Nutzers von der Bildaufnahmeeinrichtung (116) aus dem Bild des wenigstens einen Auges (111) umfasst und dass die Versatzermittlungsstufe (125, 126) ausgebildet ist zum Ermitteln des Versatzes (dx, dy) zwischen der Soll-Berührposition (107) und der vom Nutzer gewählten tatsächlichen Berührposition (113) auf dem berührungsempfindlichen Bildschirm (101) abhängig vom Betrachtungswinkel (ax, ay) und zusätzlich vom Abstand (sx, sy) des wenigstens einen Auges (111) des Nutzers von der Bildaufnahmeeinrichtung (116).

3. Verfahren zum Steuern eines nach Anspruch 1 oder 2 ausgebildeten Daten- und/oder Kommunikationsgeräts (100), wobei

   • ein Bild wenigstens eines Auges (111) eines Nutzers aufgenommen wird,
   • durch Analyse des aufgenommenen Bildes in diesem eine Position des wenigstens einen Auges (111) des Nutzers bestimmt wird,
   • aus der Position des wenigstens einen Auges (111) im aufgenommenen Bild ein Betrachtungswinkel (ax, ay) des Nutzers bestimmt wird,
   • ein vom Betrachtungswinkel (ax, ay) abhängiger Versatz (dx, dy) zwischen einer Soll-Berührposition (107) und einer vom Nutzer gewählten tatsächlichen Berührposition (113) auf dem berührungsempfindlichen Bildschirm (101) ermittelt wird,
   • eine korrigierte Berührposition durch Korrigieren der tatsächlichen Berührposition (113) um den ermittelten Versatz (dx, dy) gewonnen wird und
   • die korrigierte Berührposition bereitgestellt wird als Betätigungssignal zum Betätigen eines der Soll-Berührposition (107) zugeordneten virtuellen Bedienelements (106) durch Berühren des berührungsempfindlichen Bildschirms (101) an der tatsächlichen Berührposition (113).

4. Verfahren nach Anspruch 3, **dadurch gekennzeichnet, dass** aus dem Bild des wenigstens einen Auges (111) weiterhin ein Abstand (sx, sy) des wenigstens einen Auges (111) des Nutzers von der Bildaufnahmeeinrichtung (116) bestimmt wird und dass der Versatz (dx, dy) zwischen der SollBerührposition (107) und der vom Nutzer gewählten tatsächlichen Berührposition (113) auf dem berührungsempfindlichen Bildschirm (101) abhängig vom Betrachtungswinkel (ax, ay) und zusätzlich vom Abstand (sx, sy) des wenigstens einen Auges (111) des Nutzers von der Bildaufnahmeeinrichtung (116) ermittelt wird.

5. Verfahren nach Anspruch 3 oder 4, **dadurch gekennzeichnet, dass** ein Bild beider Augen (111) eines Nutzers aufgenommen und durch Analyse des aufgenommenen Bildes in diesem eine mittlere Augenposition der beiden Augen (111) des Nutzers bestimmt wird, und dass die mittlere Augenposition in den weiteren Verfahrensschritten wahlweise anstelle der Position des wenigstens einen Auges (111) des Nutzers ausgewertet wird.

6. Verfahren nach Anspruch 5, **dadurch gekennzeichnet, dass** als Grundlage zum Bestimmen des Abstands (sx, sy) der Augen (111) und/oder einer mittleren Augenposition des Nutzers von der Bildaufnahmeeinrichtung (116) ein Abstand der Positionen der Augen (111) im Bild voneinander ermittelt wird.

7. Verfahren nach Anspruch 3, 4 oder 5, **dadurch gekennzeichnet, dass** als Grundlage zum Bestimmen des Abstands (sx, sy) des wenigstens einen Auges (111) und/oder einer mittleren Augenposition des Nutzers von der Bildaufnahmeeinrichtung (116) ein Durchmesser einer Iris im Bild des wenigstens einen Auges (111) bestimmt wird und/oder dass der Abstand (sx, sy) des wenigstens einen Auges (111) und/oder der mittleren Augenposition des Nutzers von der Bildaufnahmeeinrichtung (116) aus einer Einstellung einer auf das Bild des wenigstens einen Auges (111) scharf stellenden selbsttätigen Fokussiereinrichtung der Bildaufnahmeeinrichtung (116) gewonnen wird.

8. Computerprogrammprodukt, aufweisend Programmteile zum Ausführen eines Verfahrens nach mindestens einem der Ansprüche 3 bis 7.

9. Maschinenlesbare, insbesondere computerlesbare, Datenstruktur, erzeugt durch ein Verfahren gemäß mindestens einem der Ansprüche 3 bis 7 und/oder durch mindestens ein Computerprogrammprodukt gemäß Anspruch 8.

10. Maschinenlesbarer, insbesondere computerlesbarer, Datenträger, auf dem mindestens ein Computerprogrammprodukt gemäß Anspruch 8 aufgezeichnet und/oder gespeichert ist und/oder auf dem mindestens eine Datenstruktur gemäß Anspruch 9 zum Abruf bereit gehalten ist.

EP 2 849 026 A1

Fig. 1

9

Fig. 2

Europäisches
Patentamt

European
Patent Office

Office européen
des brevets

**EUROPÄISCHER RECHERCHENBERICHT**

Nummer der Anmeldung

EP 14 18 0128

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2009 110275 A (SHARP KK) 21. Mai 2009 (2009-05-21) * Zusammenfassung; Abbildungen 1-7 * * Absätze [0001], [0005], [0017], [0018], [0023] - [0032], [0039], [0042] - [0069], [0074] * ----- | 1-10 | INV. G06F3/01 G06F3/041 |
| X | US 2011/285657 A1 (SHIMOTANI MITSUO [JP] ET AL) 24. November 2011 (2011-11-24) * Zusammenfassung; Abbildungen 1-9 * * Absätze [0026], [0032], [0052] - [0062], [0072], [0078], [0081] - [0084] * ----- | 1,3,5, 8-10 | |

RECHERCHIERTE
SACHGEBIETE (IPC)

G06F

Der vorliegende Recherchenbericht wurde für alle Patentansprüche erstellt

| Recherchenort | Abschlußdatum der Recherche | Prüfer |
|---|---|---|
| München | 2. Februar 2015 | Köhn, Andreas |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus anderen Gründen angeführtes Dokument
..........................................................................................
& : Mitglied der gleichen Patentfamilie, übereinstimmendes
      Dokument

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 14 18 0128

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-02-2015

| Im Recherchenbericht angeführtes Patentdokument | Datum der Veröffentlichung | Mitglied(er) der Patentfamilie | Datum der Veröffentlichung |
|---|---|---|---|
| JP 2009110275 A | 21-05-2009 | JP 2009110275 A<br>JP 2009110275 K1 | 21-05-2009<br>21-05-2009 |
| US 2011285657 A1 | 24-11-2011 | CN 102365610 A<br>DE 112010001445 T5<br>JP 5355683 B2<br>US 2011285657 A1<br>WO 2010113397 A1 | 29-02-2012<br>25-10-2012<br>27-11-2013<br>24-11-2011<br>07-10-2010 |

EPO FORM P0461

Für nähere Einzelheiten zu diesem Anhang : siehe Amtsblatt des Europäischen Patentamts, Nr.12/82